# EUROPEAN PATENT APPLICATION

(11) **EP 4 258 404 A1**
(43) Date of publication of application: **11.10.2023**
(21) Application number: 22871164.4
(22) Date of filing: 21.12.2022
(51) Int. Cl.: H01M 10/0525, H01M 4/13

(54) **ELECTROCHEMICAL DEVICE AND ELECTRONIC DEVICE**

(30) Priority: 28.02.2022 CN 202210189708
(71) Applicant: Ningde Amperex Technology Ltd., Ningde City, Fujian Province 352100 (CN)
(72) Inventor: TAO, Wei, Ningde, Fujian 352100 (CN); WU, Ruitao, Ningde, Fujian 352100 (CN); WU, Fei, Ningde, Fujian 352100 (CN)
(74) Representative: Icosa
(86) International application number: PCT/CN2022/140583
(87) International publication number: WO 2023/160182

(57) **Abstract**

This application provides an electrochemical device and an electronic device. The electrochemical device includes: a positive electrode plate and a negative electrode plate. The positive electrode plate includes a positive active material layer. The negative electrode plate includes a negative current collector, a first negative active material layer, and a second negative active material layer. The first negative active material layer includes a first edge and a second edge in a length direction of the negative electrode plate. The second negative active material layer includes a third edge and a fourth edge in the length direction. The positive active material layer includes a fifth edge and a sixth edge in the length direction. The third edge protrudes beyond the first edge and the fifth edge in the length direction. A distance between the first edge and the fifth edge in the length direction of the negative electrode plate is less than 2 mm. Kinetic performance of the second negative active material layer is higher than kinetic performance of the first negative active material layer. This application ensures a sufficient capacity while preventing lithium plating.

## Description

### CROSS-REFERENCE TO RELATED APPLICATIONS

This application is based on and claims priority to Chinese Patent Application No. 202210189708.0, filed on February 28, 2022 and entitled "ELECTROCHEMICAL DEVICE AND ELECTRONIC DEVICE", which is incorporated herein by reference in its entirety.

### TECHNICAL FIELD

This application relates to the field of electrochemical energy storage, and in particular, to an electrochemical device and an electronic device.

### BACKGROUND

With the development of electrochemical energy storage technology, higher requirements have been imposed on the safety performance and energy density of electrochemical devices (such as a lithium-ion battery), and further improvement in this respect is expected.

### SUMMARY

This application provides an electrochemical device, including: a positive electrode plate and a negative electrode plate. The positive electrode plate includes a positive active material layer. The negative electrode plate includes a negative current collector, a first negative active material layer, and a second negative active material layer. The first negative active material layer is located between the negative current collector and the second negative active material layer. The first negative active material layer includes a first edge and a second edge in a length direction of the negative electrode plate. The second negative active material layer includes a third edge and a fourth edge in the length direction. The positive active material layer includes a fifth edge and a sixth edge in the length direction. The first edge, the third edge, and the fifth edge are located on a same side. The second edge, the fourth edge, and the sixth edge are located on another side that is opposite. The third edge protrudes beyond the first edge and the fifth edge in the length direction. A distance between the first edge and the fifth edge in the length direction is less than 2 mm.

In some embodiments, the distance between the first edge and the fifth edge in the length direction is 0. In some embodiments, the fourth edge protrudes from the second edge and the sixth edge in the length direction. In some embodiments, a distance between the second edge and the sixth edge in the length direction is less than 2 mm. In some embodiments, the distance between the second edge and the sixth edge in the length direction is 0. In some embodiments, a distance between the third edge and the fifth edge in the length direction is 2 mm to 8 mm. In some embodiments, a distance between the fourth edge and the sixth edge in the length direction is 2 mm to 8 mm.

In some embodiments, a gram capacity of a negative active material in the first negative active material layer is greater than a gram capacity of a negative active material in the second negative active material layer. In some embodiments, a resistivity of the second negative active material layer is less than a resistivity of the first negative active material layer. In some embodiments, a mass percentage of a conductive agent in the first negative active material layer is less than a mass percentage of a conductive agent in the second negative active material layer. In some embodiments, a porosity of the first negative active material layer is less than a porosity of the second negative active material layer. In some embodiments, the first negative active material layer and the second negative active material layer include: a negative active material coated with a modifier, and a coating amount of the negative active material in the first negative active material layer is less than a coating amount of the negative active material in the second negative active material layer. In some embodiments, an average particle diameter of the negative active material in the first negative active material layer is greater than an average particle diameter of the negative active material in the second negative active material layer. In some embodiments, the first negative active material layer and the second negative active material layer include graphite, and a graphite orientation index in the first negative active material layer is greater than a graphite orientation index in the second negative active material layer.

An embodiment of this application further provides an electronic device, including the electrochemical device.

This application leaves the third edge to protrude from the first edge and the fifth edge in the length direction. In this way, lithium ions released from the positive electrode plate can be intercalated into the second negative active material layer. The second negative active material layer is superior to the first negative active material layer in kinetic performance, thereby preventing the lithium plating of the negative electrode plate. In addition, by roughly aligning the first edge with the fifth edge in the length direction, capacity loss of the negative electrode is avoided, a sufficient energy density of the electrochemical device is ensured, lithium plating is prevented, and the cycle performance is improved.

### BRIEF DESCRIPTION OF DRAWINGS

FIG. 1 is a partial sectional view of an electrochemical device sectioned along a length direction of a negative electrode plate according to some embodiments;
FIG. 2 is a partial sectional view of an electrochemical device sectioned along a length direction of a negative electrode plate according to some embodiments;
FIG. 3 is a partial sectional view of an electrochemical device sectioned along a length direction of a negative electrode plate according to a comparative embodiment;
FIG. 4 is a partial sectional view of an electrochemical device sectioned along a length direction of a negative electrode plate according to Embodiment 1;
FIG. 5 is a partial sectional view of an electrochemical device sectioned along a length direction of a negative electrode plate according to Embodiment 2;
FIG. 6 is a partial sectional view of an electrochemical device sectioned along a length direction of a negative electrode plate according to Embodiment 3;
FIG. 7 is a partial sectional view of an electrochemical device sectioned along a length direction of a negative electrode plate according to Embodiment 4; and
FIG. 8 is a partial sectional view of an electrochemical device sectioned along a length direction of a negative electrode plate according to Embodiment 5.

Reference numerals: 10. positive electrode plate; 101. positive current collector; 102. positive active material layer; 1021. fifth edge; 11. separator; 1231. third edge; 1221. first edge; 1022. sixth edge; 1232. fourth edge; 123. second negative active material layer; 1222. second edge; 122. first negative active material layer; 121. negative current collector; 12. negative electrode plate.

### DETAILED DESCRIPTION OF EMBODIMENTS

The following embodiments enable a person skilled in the art to understand this application more comprehensively, but without limiting this application in any way.

In designing an electrochemical device (such as a lithium-ion battery), a sufficient space needs to be reserved in a negative electrode plate so that lithium deintercalated from a positive electrode plate can be fully intercalated into a negative active material. Therefore, the negative electrode plate usually protrudes beyond the positive electrode plate in length and/or width to avoid lithium plating or short-circuit problems caused by the positive electrode plate beyond the negative electrode plate. However, kinetic performance of the part of the negative electrode plate that protrudes beyond the positive electrode plate is close to kinetic performance of the part of the negative electrode plate that does not protrude beyond the positive electrode plate. A transmission path to the protruding part of the negative electrode plate is longer than a transmission path to the non-protruding part of the negative electrode plate. Therefore, lithium can hardly be deintercalated from the protruding part, thereby breaking the balance between deintercalation and intercalation. The lithium intercalated into the protruding part is more than the deintercalated lithium. Over time, the lithium accumulates at the protruding part and is precipitated at the protruding part. Consequently, lithium plating occurs at the start end and the termination end of the electrode assembly during cycling. In some technologies, the electrode plate is tapered asymmetrically or symmetrically to alleviate the lithium plating at the termination end of the negative electrode plate. Alternatively, adhesive tape is affixed to the termination end of the positive electrode plate to frustrate deintercalation of lithium ions from the positive electrode plate, so as to restrict the lithium plating at the termination end of the negative electrode plate. However, this method just lengthens the protruding part and delays the lithium plating without fundamentally solving the problem, and causes capacity loss. In some technologies, a coating width on an upper layer of the negative electrode plate is greater than a coating width on a lower layer of the negative electrode plate, thereby forming a structure in which the upper layer covers the lower layer in the width direction of the negative electrode plate. The upper layer is superior to the lower layer in kinetics, and accordingly, the upper layer differs from the lower layer in capacity to some extent. Generally, a material of higher kinetics implements a lower capacity. Therefore, the capacity of the part of the upper layer beyond the lower layer is lower than the capacity of the lower layer, and accordingly, the corresponding negative-to-positive capacity ratio (N/P ratio) will change. That is, the N/P ratio of the protruding part is lower, thereby aggravating the lithium plating to some extent.

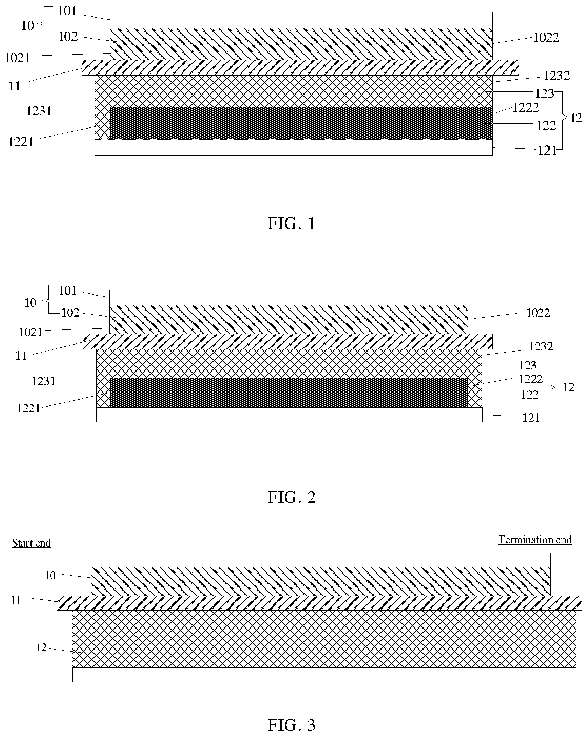

As shown in FIG. 1, some embodiments of this application provide an electrochemical device. The electrochemical device includes a positive electrode plate 10 and a negative electrode plate 12. In some embodiments, the positive electrode plate 10 is separated from the negative electrode plate 12 by a separator 11 in between. In some embodiments, the positive electrode plate 10 includes a positive active material layer 102. In some embodiments, the positive electrode plate 10 may further include a positive current collector 101. The positive active material layer 102 may be disposed on one side or both sides of the positive current collector 101.

In some embodiments, the negative electrode plate 12 includes a negative current collector 121, a first negative active material layer 122, and a second negative active material layer 123. The first negative active material layer 122 is located between the negative current collector 121 and the second negative active material layer 123. Understandably, although the first negative active material layer 122 and the second negative active material layer 123 shown in FIG. 1 are located on just one side of the negative current collector 121, this is merely illustrative. Both sides of the negative current collector 121 may be coated with the first negative active material layer 122 and the second negative active material layer 123.

In some embodiments, as shown in FIG. 1, the first negative active material layer 122 includes a first edge 1221 and a second edge 1222 in the length direction (the left-right horizontal direction in FIG. 1) of the negative electrode plate 12. The second negative active material layer 123 includes a third edge 1231 and a fourth edge 1232 in the length direction. The positive active material layer 102 includes a fifth edge 1021 and a sixth edge 1022 in the length direction. In some embodiments, the first edge 1221, the third edge 1231, and the fifth edge 1021 are located on the same side; and the second edge 1222, the fourth edge 1232, and the sixth edge 1022 are located on the other side that is opposite.

In some embodiments, as shown in FIG. 1, the third edge 1231 protrudes from the first edge 1221 and the fifth edge 1021 in the length direction (the left-right horizontal direction in FIG. 1). In some embodiments, the first edge 1221 is aligned with the fifth edge 1021. However, due to process errors, the first edge 1221 is considered aligned with the fifth edge 1021 when the distance between the first edge 1221 and the fifth edge 1021 in the length direction is less than 2 mm. In some embodiments, the distance between the first edge 1221 and the fifth edge 1021 in the length direction is 0, that is, perfect alignment is implemented. In addition, the second negative active material layer 123 is superior to the first negative active material layer 122 in kinetic performance.

With the second negative active material layer 123 being superior to the first negative active material layer 122 in kinetic performance, because the part of the negative electrode plate 12 beyond the positive electrode plate 10 in the length direction is substantially the second negative active material layer 123, that is, the material of relatively high kinetic performance, the lithium ions can be well deintercalated from the part of the negative electrode plate 12 beyond the positive electrode plate 10 in the length direction, thereby solving the problem of lithium plating. In addition, this structure does not result in loss of any active materials, and therefore, does not impair the overall capacity. The second negative active material layer 123 is superior to the first negative active material layer 122 in kinetic performance, and therefore, the gram capacity of the negative active material in the first negative active material layer 122 is higher than the gram capacity of the negative active material in the second negative active material layer 123. If the first edge 1221 obviously fails to reach the fifth edge 1021 in the length direction, the negative electrode plate 12 at this edge position will lack space for storing the lithium ions deintercalated from the positive electrode plate, thereby resulting in lithium plating and impairing cycle performance. If the first edge 1221 obviously protrudes beyond the fifth edge 1021 in the length direction, the kinetic performance of the negative electrode plate 12 at the first edge 1221 is equivalent to the kinetic performance of the first negative active material layer 122 superimposed on the second negative active material layer 123, and therefore, and is lower than the kinetic performance of the second negative active material layer 123 alone, thereby leading to lithium plating at the edge of the negative electrode plate 12 and impairing the cycle performance. This application leaves the third edge 1231 to protrude from the first edge 1221 and the fifth edge 1021 in the length direction. In this way, lithium ions released from the positive active material layer 102 can be intercalated into the second negative active material layer 123 and well precipitated, thereby avoiding lithium plating on the negative electrode plate 12. In addition, by roughly aligning the first edge 1221 with the fifth edge 1021 in the length direction, the high-capacity first negative active material layer 122 is caused to adapt to the positive active material layer 102. In this way, not only a sufficient capacity is ensured, but also the first negative active material layer 122 is prevented from impairing the kinetic performance of the part of the negative electrode plate 12 beyond the positive electrode plate 10, thereby both enhancing the energy density of the electrochemical device and preventing lithium plating, and in turn, ensuring high cycle performance. Therefore, the electrochemical device according to this application not only avoids lithium plating on the negative electrode plate, but also minimizes adverse effects on the energy density of the electrochemical device, and ensures high cycle performance.

If the first edge 1221 of the second negative active material layer 123 is indented against the fifth edge 1021 of the positive active material layer 102, the lithium ions deintercalated from an edge region of the positive electrode plate 10 are unable to be fully stored at the negative electrode plate 12. Consequently, lithium plating occurs in the edge region of the negative electrode plate 12 and reduces the capacity, thereby impairing the cycle performance of the electrochemical device, or even causing a short circuit or a safety problem. On the other hand, if the first edge 1221 protrudes beyond the fifth edge 1021 of the positive active material layer 102, the kinetic performance of the part of the negative electrode plate 12 beyond the positive electrode plate 10 decreases, thereby possibly leading to lithium plating and impairing the cycle performance.

In a width direction of the negative electrode plate, the coating width of the upper layer (the second negative active material layer) may be larger than the coating width of the lower layer (the first negative active material layer), and the edge of the lower-layer coating is aligned with the edge of the positive active material layer. In addition, in the width direction of the negative electrode plate, the negative electrode plate may protrude beyond the positive electrode plate in width instead. In this technical solution, the lower-layer coating of the negative electrode plate is aligned with the coating of the positive electrode plate, and the upper-layer coating of the negative electrode plate protrudes beyond the coating of the positive electrode plate. In addition, the upper-layer coating is superior to the lower-layer coating in kinetic performance, thereby significantly improving the cycle performance. The upper-layer coating of high kinetics enhances the kinetic performance, and therefore, effectively alleviates lithium plating and enhances cycle performance. Compared with the practice of applying the second negative active material layer alone, this solution further increases the energy density.

In some embodiments, as shown in FIG. 2, the fourth edge 1232 protrudes from the second edge 1222 and the sixth edge 1022 in the length direction. In this way, the protruding second negative active material layer 123 is more capable of receiving the lithium ions released from the positive active material layer 102, thereby avoiding lithium plating on the negative electrode plate 12.

In some embodiments, the second edge 1222 is aligned with the sixth edge 1022. However, due to process errors, the second edge 1222 is considered aligned with the sixth edge 1022 when the distance between the second edge 1222 and the sixth edge 1022 in the length direction is less than 2 mm. In some embodiments, the distance between the second edge 1222 and the sixth edge 1022 in the length direction is 0, that is, perfect alignment is implemented. By roughly aligning the second edge 1222 with the sixth edge 1022 in the length direction, a sufficient amount of the first negative active material layer 122 is ensured, thereby increasing the energy density of the electrochemical device, and preventing the first negative active material layer 122 from impairing the kinetic performance of the part of the negative electrode plate 12 beyond the edge of the positive electrode plate 10, and in turn, preventing lithium plating and ensuring high cycle performance. Therefore, the electrochemical device according to this application not only avoids lithium plating on the negative electrode plate and ensures high cycle performance, but also minimizes adverse effects on the energy density of the electrochemical device.

In some embodiments, the thickness of the second negative active material layer 123 is less than the thickness of the first negative active material layer 122. In this way, compared with a circumstance in which both the second negative active material layer 123 and the first negative active material layer 122 protrude, this technical solution increases the energy density of the electrochemical device because the thicker first negative active material layer 122 is aligned with the edge of the positive active material layer 102 and the gram capacity of the negative active material in the first negative active material layer 122 is higher than the gram capacity of the negative active material in the second negative active material layer 123.

In some embodiments, a distance between the third edge 1231 and the fifth edge 1021 in the length direction is 2 mm to 8 mm, and further, 3 mm to 8 mm, and still further, 3 mm to 5 mm. In some embodiments, a distance between the fourth edge 1232 and the sixth edge 1022 in the length direction is 2 mm to 8 mm, and further, 3 mm to 8 mm, and still further, 3 mm to 5 mm. If the distance between the third edge 1231 and the fifth edge 1021 in the length direction or the distance between the fourth edge 1232 and the sixth edge 1022 in the length direction is deficient, the protruding second negative active material layer 123 is unable to sufficiently receive the lithium ions released from the positive active material layer 102. If the distance between the third edge 1231 and the fifth edge 1021 in the length direction or the distance between the fourth edge 1232 and the sixth edge 1022 in the length direction is excessive, the space occupied by the second negative active material layer 123 of a lower gram capacity may increase unnecessarily, and the energy density of the electrochemical device may be adversely affected. In some embodiments, the gram capacity of the negative active material in the first negative active material layer 122 is greater than the gram capacity of the negative active material in the second negative active material layer 123.

In some embodiments, the resistivity of the second negative active material layer 123 is less than the resistivity of the first negative active material layer 122. Therefore, the second negative active material layer 123 can well release the intercalated lithium ions to prevent lithium plating. In addition, this provides a good channel for transmitting the lithium ions into the first negative active material layer 122, and induces the lithium ions to enter the inner first negative active material layer 122, thereby improving the rate performance. In some embodiments, a mass percentage of a conductive agent in the first negative active material layer 122 is less than a mass percentage of a conductive agent in the second negative active material layer 123. The conductive agent may be conductive carbon black, carbon nanotubes, or the like. The kinetic performance of the second negative active material layer 123 can be improved by increasing the content of the conductive agent in the second negative active material layer 123. In some embodiments, a porosity of the first negative active material layer is less than a porosity of the second negative active material layer, thereby providing more channels for transmission of lithium ions. In some embodiments, the first negative active material layer 122 and the second negative active material layer 123 include: a negative active material coated with a modifier. A coating amount of the negative active material in the first negative active material layer 122 is less than a coating amount of the negative active material in the second negative active material layer 123, thereby making it easier to intercalate and deintercalate lithium ions in the negative active material of the second negative active material layer 123. In some embodiments, the average particle diameter of the negative active material in the first negative active material layer 122 is greater than the average particle diameter of the negative active material in the second negative active material layer 123. Therefore, the specific surface area of the negative active material in the second negative active material layer 123 is larger, thereby facilitating transmission of lithium ions. In some embodiments, the first negative active material layer 122 and the second negative active material layer 123 include graphite, and a graphite orientation index in the first negative active material layer is greater than a graphite orientation index in the second negative active material layer.

In some embodiments, the positive current collector 101 may be an aluminum foil, or may be another positive current collector commonly used in this field. In some embodiments, the thickness of the positive current collector may be 1 µm to 50 µm. In some embodiments, the positive active material layer 102 may be applied onto just a partial region of the positive current collector 101.

In some embodiments, the positive active material layer 102 may include a positive material, a conductive agent, and a binder. In some embodiments, the positive material may include at least one of lithium cobalt oxide, lithium iron phosphate, lithium aluminum oxide, lithium manganese oxide, or lithium nickel cobalt manganese oxide. In some embodiments, the conductive agent of the positive electrode plate 10 may include at least one of conductive carbon black, graphite sheets, graphene, or carbon nanotubes. In some embodiments, the binder in the positive electrode plate 10 may include at least one of polyvinylidene difluoride, poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, a mass ratio of the positive material, the conductive agent, and the binder in the positive active material layer 102 is (80 to 99): (0.1 to 10): (0.1 to 10), but this is merely an example, and any other appropriate mass ratio may apply.

In some embodiments, the first negative active material layer 122 and the second negative active material layer 123 each may include a negative material, a conductive agent, and a binder. In some embodiments, the negative material may include at least one of artificial graphite, natural graphite, modifier-coated graphite, silicon, or a silicon-based material. In some embodiments, the silicon-based material includes at least one of silicon, a silicon-oxygen material, a silicon-carbon material, or a silicon-oxygen-carbon material. In some embodiments, the conductive agent in the first negative active material layer 122 and the second negative active material layer 123 may include at least one of conductive carbon black, Ketjen black, graphite sheets, graphene, metal powder, carbon nanotubes, or carbon fibers. In some embodiments, the binder in the first negative active material layer 122 and the second negative active material layer 123 may include at least one of carboxymethyl cellulose (CMC), polyacrylic acid, polyvinylpyrrolidone, polyaniline, polyimide, polyamideimide, polysiloxane, styrene-butadiene rubber, epoxy resin, polyester resin, polyurethane resin, or polyfluorene. In some embodiments, a mass ratio between the negative material, the conductive agent, and the binder in the first negative active material layer 122 and the second negative active material layer 123 may be (78 to 98.5): (0.1 to 10): (0.1 to 10). In some embodiments, the foregoing negative materials may be dissolved in a solvent at a given ratio, and mixed well to make a slurry. Specifically, in the second negative active material layer, the negative material may account for 90% to 98% by mass percentage, and preferably 97.8%, the conductive agent may account for 0.2% to 4% by mass percentage, and preferably 1.2%, and the binder may account for 0.6% to 6% by mass percentage, and preferably 1.0%. In the first negative active material layer, the negative material may account for 98.0% by mass percentage, the conductive agent may account for 1.0% by mass percentage, and the binder may account for 0.6% to 6% by mass percentage, and preferably 1.0%. The resulting slurry possesses a viscosity of 2000 mPa.s to 7000 mPa·s and a solid content of 70% to 80%. Understandably, what is enumerated above is merely an example, and any other appropriate material and mass ratio may apply. In some embodiments, the types and mass percentage of the negative materials in the first negative active material layer 122 may be the same as or different from those in the second negative active material layer 123. In some embodiments, the negative current collector 121 may be at least one of a copper foil, a nickel foil, or a carbon-based current collector.

The double-layer coating of the negative electrode plate is performed by a double-layer coating machine. Two nozzles work concurrently to apply the coating. The width of the coating is defined by the width of a gasket. The width of the upper layer is greater than the width of the lower layer, and the width difference is the value specified in each embodiment. The length of coating is determined by a clearance valve of the upper layer and the lower layer. A response time of the upper layer is longer than that of the lower layer. The specific response time difference depends on the coating speed and the structure of the coating ends.

In some embodiments, the separator 11 includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and can improve stability of the battery through a turn-off effect. In some embodiments, a thickness of the separator 11 falls within a range of approximately 3 µm to 20 µm.

In some embodiments, a surface of the separator 11 may further include a porous layer. The porous layer is disposed on at least one surface of the separator. The porous layer includes inorganic particles and a binder. The inorganic particles are at least one selected from aluminum oxide (Al₂O₃), silicon oxide (SiO₂), magnesium oxide (MgO), titanium oxide (TiO₂), hafnium dioxide (HfO₂), tin oxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polymethyl methacrylate, polytetrafluoroethylene, and polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical device includes, but is not limited to, a lithium-ion battery. In some embodiments, the electrochemical device further includes an electrolytic solution. The electrolytic solution includes at least one of fluoroether, fluoroethylene carbonate, or ether nitrile. In some embodiments, the electrolytic solution further includes a lithium salt. The lithium salt includes lithium bis(fluorosulfonyl)imide and lithium hexafluorophosphate. The concentration of the lithium salt is 1 mol/L to 2 mol/L, and the mass ratio between the lithium bis(fluorosulfonyl)imide and the lithium hexafluorophosphate is 0.06 to 5. In some embodiments, the electrolytic solution may further include a nonaqueous solvent. The nonaqueous solvent may be a carbonate compound, a carboxylate compound, an ether compound, another organic solvent, or any combination thereof.

The carbonate compound may be a chain carbonate compound, a cyclic carbonate compound, a fluorocarbonate compound, or any combination thereof.

Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the carboxylate compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device according to this embodiment of this application is not particularly limited, and may be any electronic device known in the prior art. In some embodiments, the electronic device may include, but without being limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, unmanned aerial vehicle, lighting appliance, toy, game console, watch, electric tool, flashlight, camera, large household battery, lithium-ion capacitor, and the like.

Some specific embodiments and comparative embodiments are enumerated below to give a clearer description of this application, using a lithium-ion battery as an example.

### Comparative Embodiment 1

Preparing a negative electrode plate: Using a copper foil as a current collector, using artificial graphite as a negative active material, using conductive carbon black as a conductive agent, and using styrene-butadiene rubber and carboxymethyl cellulose as a binder. Mixing the negative active material, the conductive agent, and the binder at a mass ratio of 98: 1: 1, and dispersing the mixture in deionized water to form a slurry. Stirring well, applying the slurry onto the copper foil. Drying the slurry to form a negative active material layer, where the thickness of the negative active material layer is 120 µm. Performing cold pressing and slitting to obtain a negative electrode plate.

Preparing a positive electrode plate: Mixing lithium cobalt oxide as a positive material, conductive carbon black, and polyvinylidene difluoride (PVDF) as a binder at a mass ratio of 94.8: 2.8: 2.4 in an N-methyl-pyrrolidone solvent system, and stirring well to form a slurry. Coating an aluminum foil with the slurry to form a positive active material layer, where the thickness of the positive active material layer is 80 µm. Subsequently, performing drying and cold pressing to obtain a positive electrode plate.

Preparing a separator: Stirring polyacrylic ester to form a homogeneous slurry. Coating both sides of a porous substrate (polyethylene) with the slurry, and performing drying to form a separator.

Preparing an electrolytic solution: Mixing, in an environment with a water content of less than 10 ppm, lithium hexafluorophosphate with a nonaqueous organic solvent at a mass ratio of 8: 92 to form an electrolytic solution in which a lithium salt concentration is 1 mol/L, where the nonaqueous organic solvent contains ethylene carbonate (EC), diethyl carbonate (DEC), propylene carbonate (PC), propyl propionate (PP), and vinylene carbonate (VC) mixed at a mass ratio of 20: 30: 20: 28: 2.

Preparing a lithium-ion battery: Stacking the positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly in an aluminum plastic film that serves as an outer package. Dehydrating the electrode assembly at 80 °C, injecting the electrolytic solution, and performing packaging. Performing steps such as chemical formation, degassing, and shaping to obtain a lithium-ion battery. As shown in FIG. 3, the two ends of the negative active material layer in the length direction protrude beyond the positive active material layer by 8 mm.

### Embodiment 1

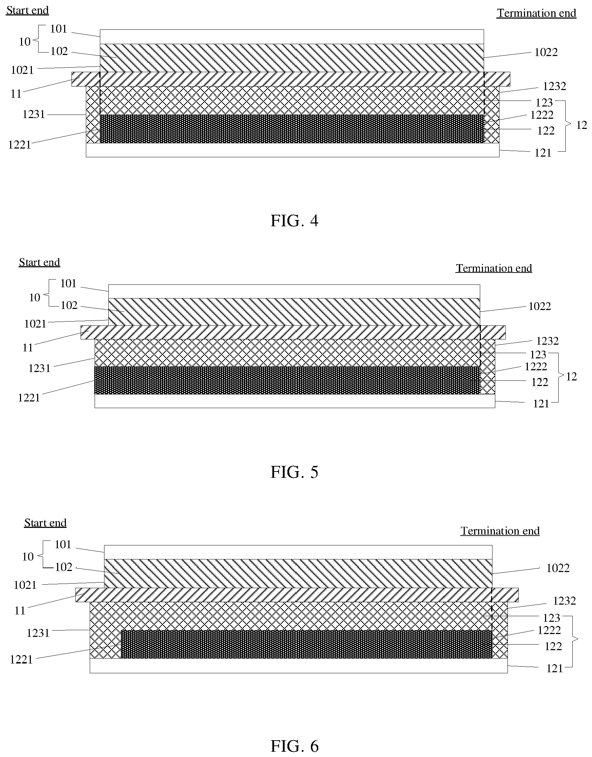

The preparation method of the lithium-ion battery in Embodiment 1 differs from Comparative Embodiment 1 only in the preparation of the negative electrode plate. The following describes only the differences. Preparing a negative electrode plate: Using a copper foil as a current collector, using artificial graphite as a negative active material, using conductive carbon black as a conductive agent, and using styrene-butadiene rubber and carboxymethyl cellulose as a binder. Mixing the negative active material, conductive agent, and binder at a mass ratio of 98: 1: 1, and dispersing the mixture in deionized water to form a lower-layer slurry. Mixing the negative active material, the conductive agent, and the binder at a mass ratio of 97.8: 1.2: 1, and dispersing the mixture in deionized water to form an upper-layer slurry. Stirring well, coating a copper foil with the two types of slurry. Drying the two types of slurry to form a first negative active material layer and a second negative active material layer respectively. The first negative active material layer and the second negative active material layer are identical in thickness, where both ends of the second negative active material layer in the length direction protrude beyond the first negative active material layer by 8 mm, and the second negative active material layer fully covers the first negative active material layer. Performing cold pressing and slitting to obtain a negative electrode plate. After the lithium-ion battery is obtained, as shown in FIG. 4, the positive active material layer is aligned with the first negative active material layer. Both ends of the second negative active material layer in the length direction protrude beyond the positive active material layer by 8 mm.

### Embodiment 2

The preparation method of the lithium-ion battery in Embodiment 2 differs from Embodiment 1 in the structure of the finally obtained lithium-ion battery. Specifically, as shown in FIG. 5, after the lithium-ion battery is obtained, at the start end of the negative electrode plate in the length direction, one end of the first negative active material layer is aligned with a corresponding end of the second negative active material layer, and both of the two ends protrude beyond a corresponding end of the positive active material layer on the same side by 8 mm. The structure of the termination end of the negative electrode plate in the length direction is the same as that in Embodiment 1.

### Embodiment 3

The preparation method of the lithium-ion battery in Embodiment 3 differs from Embodiment 1 in the structure of the finally obtained lithium-ion battery. Specifically, as shown in FIG. 6, after the lithium-ion battery is obtained, at the start end of the negative electrode plate in the length direction, one end of the positive active material layer protrudes beyond a corresponding end of the first negative active material layer, and a corresponding end of the second negative active material layer protrudes beyond one end of the positive active material layer. The structure of the termination end of the negative electrode plate in the length direction is the same as that in Embodiment 1.

### Embodiment 4

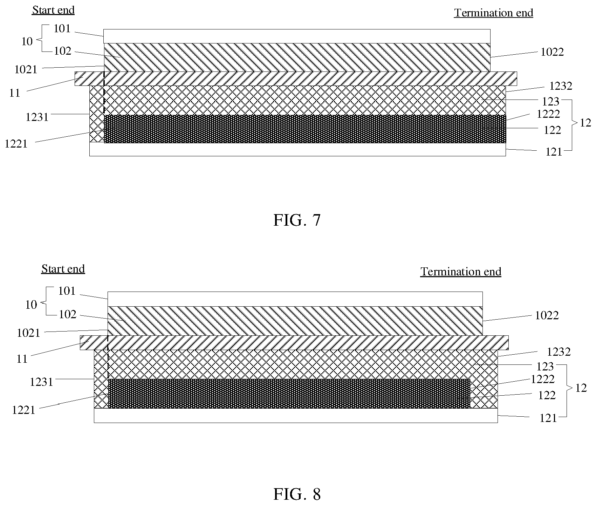

The preparation method of the lithium-ion battery in Embodiment 4 differs from Embodiment 1 in the structure of the finally obtained lithium-ion battery. Specifically, as shown in FIG. 7, after the lithium-ion battery is obtained, the structure of the start end of the negative electrode plate in the length direction is the same as that in Embodiment 1. At the termination end of the negative electrode plate in the length direction, one end of the first negative active material layer is aligned with a corresponding end of the second negative active material layer, and both of the two ends protrude beyond a corresponding end of the positive active material layer by 8 mm.

### Embodiment 5

The preparation method of the lithium-ion battery in Embodiment 5 differs from Embodiment 1 in the structure of the finally obtained lithium-ion battery. Specifically, as shown in FIG. 8, after the lithium-ion battery is obtained, the structure of the start end of the negative electrode plate in the length direction is the same as that in Embodiment 1. At the termination end of the negative electrode plate in the length direction, one end of the positive active material layer protrudes beyond a corresponding end of the first negative active material layer, and a corresponding end of the second negative active material layer protrudes beyond one end of the positive active material layer by 8 mm.

In addition, in this application, the corresponding parameters are measured by using the following method:
Measuring the energy density: Charging a lithium-ion battery at a current of 3 C under a 25 °C condition until the voltage reaches 4.45 V, and then leaving the battery to stand for 30 minutes. Subsequently, discharging the battery at a current of 1 C until the voltage reaches 3 V, and then leaving the battery to stand for 10 minutes, thereby completing one cycle. Repeating the foregoing test steps until the end of 1000 cycles, and then fully charging the lithium-ion battery according to the foregoing process, and disassembling the battery. Observing the lithium plating status of the negative electrode plate.

Cycle capacity retention rate = 1000^{th}-cycle discharge capacity/initial discharge capacity.

Table 1 shows parameters and evaluation results in Embodiments 1 to 5 and Comparative Embodiment 1.

**Table 1**

| Group | Occurrence of lithium plating at the start end | Occurrence of lithium plating at the termination end | Cycle capacity retention rate |
|---|---|---|---|
| Comparative Embodiment 1 | Lithium plating | Lithium plating | 70% |
| Embodiment 1 | No lithium plating | No lithium plating | 85% |
| Embodiment 2 | Lithium plating | No lithium plating | 80% |
| Embodiment 3 | Lithium plating | No lithium plating | 75% |
| Embodiment 4 | No lithium plating | Lithium plating | 80% |
| Embodiment 5 | No lithium plating | Lithium plating | 75% |

In Comparative Embodiment 1, the two ends of the single-layer negative active material layer protrude beyond the positive active material layer. This part of the negative active material layer beyond the positive active material layer is inferior in kinetic performance, thereby leading to lithium plating at the start end and the termination end.

In Embodiment 1, the two ends of the second negative active material layer protrude beyond the first negative active material layer. The two ends of the first negative active material layer are aligned with the two ends of the positive active material layer, and the second negative active material layer is superior to the first negative active material layer in kinetic performance. Therefore, lithium ions can be well intercalated and deintercalated at the start end and termination end of the negative electrode plate. In addition, the first negative active material layer is aligned with the positive active material layer, thereby enhancing the cycle performance of the lithium-ion battery while preventing lithium plating. In Embodiment 2, the start ends of both the first negative active material layer and the second negative active material layer protrude beyond one end of the positive active material layer, and the start end of the first negative active material layer reduces the overall kinetic performance, thereby frustrating smooth deintercalation of lithium ions, resulting in lithium plating, and impairing the cycle capacity retention rate. In Embodiment 3, the negative active material layer is a double-layer coating, but the positive active material layer at the start end protrudes beyond an end of the first negative active material layer. Therefore, at the start end, the lithium ions are primarily accommodated by the second negative active material layer. Consequently, the negative electrode plate is unable to provide enough space for accommodating the lithium ions at the start end, thereby causing lithium plating and impairing the cycle performance. In Embodiment 4, the termination ends of both the first negative active material layer and the second negative active material layer protrude beyond one end of the positive active material layer, and the termination end of the first negative active material layer reduces the overall kinetic performance, thereby frustrating smooth deintercalation of lithium ions, resulting in lithium plating at the termination end, and impairing the cycle capacity retention rate. In Embodiment 5, the positive active material layer at the termination end protrudes beyond an end of the first negative active material layer. Therefore, at the termination end, the lithium ions are primarily accommodated by the second negative active material layer. Consequently, the negative electrode plate is unable to provide enough space for accommodating the lithium ions at the termination end, thereby causing lithium plating and impairing the cycle performance.

What is described above is merely exemplary embodiments of this application and the technical principles thereof. A person skilled in the art understands that the scope of disclosure in this application is not limited to the technical solutions formed by a specific combination of the foregoing technical features, but covers other technical solutions formed by arbitrarily combining the foregoing technical features or equivalents thereof, for example, a technical solution formed by replacing any of the foregoing features with a technical feature disclosed herein and serving similar functions.

## Claims

1. An electrochemical device, comprising: a positive electrode plate and a negative electrode plate, wherein
the positive electrode plate comprises a positive active material layer;
the negative electrode plate comprises a negative current collector, a first negative active material layer, and a second negative active material layer, and the first negative active material layer is located between the negative current collector and the second negative active material layer;
in a length direction of the negative electrode plate, the first negative active material layer comprises a first edge and a second edge, and the second negative active material layer comprises a third edge and a fourth edge, the positive active material layer comprises a fifth edge and a sixth edge, the first edge, the third edge, and the fifth edge are located on one side, and the second edge, the fourth edge, and the sixth edge are located on an opposite side;
the third edge protrudes beyond the first edge and the fifth edge in the length direction; and
a distance between the first edge and the fifth edge in the length direction is less than 2 mm.

2. The electrochemical device according to claim 1, wherein
the distance between the first edge and the fifth edge in the length direction is 0.

3. The electrochemical device according to claim 1, wherein the fourth edge protrudes from the second edge and the sixth edge in the length direction.

4. The electrochemical device according to claim 3, wherein a distance between the second edge and the sixth edge in the length direction is less than 2 mm.

5. The electrochemical device according to claim 4, wherein the distance between the second edge and the sixth edge in the length direction is 0.

6. The electrochemical device according to claim 1, wherein a distance between the third edge and the fifth edge in the length direction is 2 mm to 8 mm.

7. The electrochemical device according to claim 3, wherein a distance between the fourth edge and the sixth edge in the length direction is 2 mm to 8 mm.

8. The electrochemical device according to claim 1, wherein
a gram capacity of a negative active material in the first negative active material layer is greater than a gram capacity of a negative active material in the second negative active material layer.

9. The electrochemical device according to claim 1, satisfying at least one of the following conditions:
(a) a resistivity of the second negative active material layer is less than a resistivity of the first negative active material layer;
(b) a mass percentage of a conductive agent in the first negative active material layer is less than a mass percentage of a conductive agent in the second negative active material layer;
(c) a porosity of the first negative active material layer is less than a porosity of the second negative active material layer;
(d) the first negative active material layer and the second negative active material layer comprise: a negative active material coated with a modifier, and a coating amount of the negative active material in the first negative active material layer is less than a coating amount of the negative active material in the second negative active material layer;
(e) an average particle diameter of the negative active material in the first negative active material layer is greater than an average particle diameter of the negative active material in the second negative active material layer; or
(f) the first negative active material layer and the second negative active material layer comprise graphite, and a graphite orientation index in the first negative active material layer is greater than a graphite orientation index in the second negative active material layer.

10. An electronic device, comprising the electrochemical device according to any one of claims 1 to 9.
